# EUROPEAN PATENT APPLICATION

(11) **EP 2 143 767 A1**
(43) Date of publication of application: **13.01.2010**
(21) Application number: 09165052.3
(22) Date of filing: 09.07.2009
(51) Int. Cl.: C09D 11/00, C08G 61/12, H01L 51/00

(54) **Waterbased compositions for casting or printing**

(30) Priority: 11.07.2008 US 129692 P; 11.07.2008 EP 08160170
(71) Applicant: Acreo AB, 164 40 Kista (SE)
(72) Inventor: Sandberg, Mats, 602 17, NORRKÖPING (SE); Hellström, Stefan, 413 22, GÖTEBORG (SE)
(74) Representative: Haag, Malina Anna

(57) **Abstract**

The present invention relates to a method for providing a composition comprising water-soluble aggregates comprising an oxidized conductive polymer and a polymeric acid, comprising: providing a preparation comprising an oxidized or oxidizable conductive polymer and an organic solvent; adding an aqueous preparation comprising a polymeric acid; optionally oxidizing the oxidizable conductive polymer; and allowing the oxidized conductive polymer to interact with the polymeric acid to form an aqueous composition comprising water-soluble aggregates comprising an oxidized conductive polymer and a polymeric acid. The method can be used for providing waterbased casting or printing compositions.

## Description

### Field of the Invention

The present invention relates to a method for providing a composition for printing and casting comprising water-soluble aggregates prepared by oxidation of a conductive polymer in the presence of a polymeric acid.

### Background of the invention

Thin films of conductive and/or electrochromic organic polymers are very important for many electronic devices and are promising candidates for future electronics. Conductive organic polymers are very useful in a variety of electronic devices, such as electronic displays, indicators, memories, transistors etc. A large amount of organic conductive polymers have been shown to have interesting electrochromic properties, which means that the color is changed as the oxidation state of the polymer is changed. The electrochromic properties depend mainly on the possibility of the polymer to change oxidation state and on the electronic and the ionic conductivity of the polymer.

In many applications conductive organic polymers are used in thin films, such as continuous or discontinuous layers or patterns. In order to prepare thin films of conductive polymers, conventional casting techniques, for example spin-casting or other printing or casting techniques, such as inkjet printing, bar coating and flexographic printing, are used.

There is an ongoing search for finding optimal casting and printing compositions comprising an optimal choice of polymers for the manufacturing of electronic films with improved properties.

One important concern is that many electrochromic polymers are soluble in organic solvents, but generally show low solubility in water, which have resulted in that organic solvents, such as organic solvents containing chlorine, such as chloroform, are predominantly used in the preparation of casting or printing compositions for the manufacturing of polymeric electrochromic films. Hence, the possibility to provide aqueous compositions of conductive organic polymers is currently very limited. From environmental and health aspects, it is desirable to switch to aqueous compositions as it would result in an easier handling of the chemicals in the process and hence a reduced risk for exposure to hazardous chemicals. In industrial printing, it is desirable that the inks are free from organic volatile materials. Therefore, there is a need in the art for providing a method for providing aqueous casting or printing compositions for the manufacture of conductive polymer films.

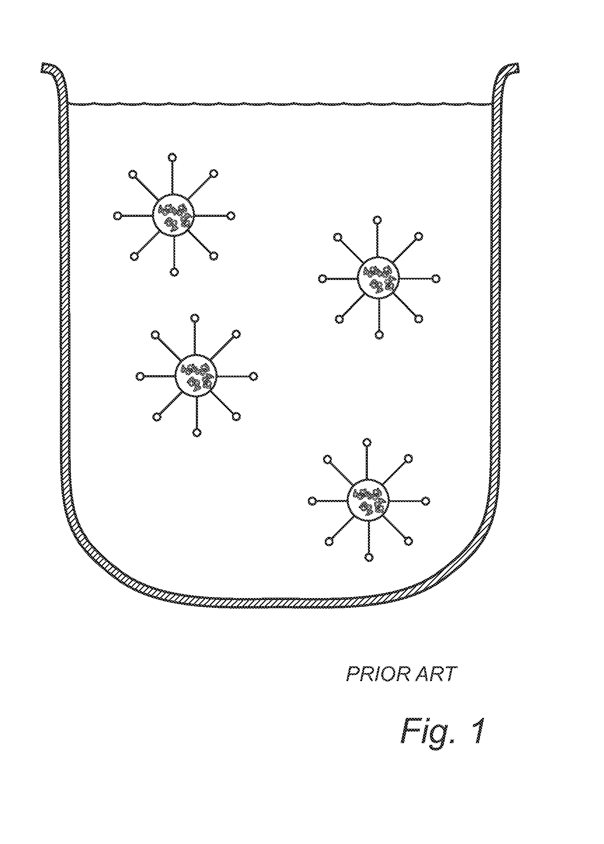

Landfester et al, (Advanced Materials, vol. 14, 2002, p 652) describes a method to render polymers, soluble in organic solvents, water processable by using a miniemulsion technique. In this method, nanospheres of the polymer are formed by the action of ultrasonic emulsification and the action of a surfactant. The nanospheres exist as a stable dispersion in water of miniemulsion type. The obtained miniemulsion is illustrated in Fig. 1. However, according to the method, SDS (Sodium dodecylsulphate) or another surfactant must present in the water-based composition in order to achieve the aqueous dispersion of the polymer. Presence of low-molecular surfactants in printing inks is generally not desirable since they can cause foaming. Further, in the printing of electronic devices it might be necessary to remove low molecular surfactants after printing since the surfactants might migrate and cause degradation of the device properties. For example, the surfactants may migrate into an interface between two layers and cause delamination, loss of contact. The surfactant is freely present in the formed film and can hence migrate and cause reduced function of the electronic device. Furthermore, solid nanoparticles are not ideal for creating a conductive film in comparison to a dissolved polymer.

Kietzke et al (Nature Materials, vol. 2, June 2003, p 408-412) describes the possibility to use two neutral conductive polymers which are dissolved in an organic solvent, and then dispersed as solid nanoparticles in water by using SDS. In the method, an organic solution of two neutral polymers are mixed with water containing an appropriate amount of a low molecular surfactant, for example SDS. After stirring and sonication, the organic solvent is evaporated which results in an aqueous dispersion of neutral polymers in the form of solid nanoparticles stabilized by the surfactants. However, a polymer blend, which is blended on molecular level is not possible to achieve by using this method. A more homogenously blended polymer composition of electron conducting and ion conducting polymers is generally desirable in the manufacturing of electrochromic polymeric films. Moreover the method is limited to polymers which are soluble in organic solvents.

Another important concern is that electrochromic polymers must show both electronic conductivity and good ionic conductivity of the ions. For many electrochromic polymers, the ionic conductivity is intrinsically poor, so that sufficient ion transport is only achieved in electrolyte solvents that can swell the electrochromic material, for example acetonitrile. This type of solvent is suitable in laboratory experiments but not for printed devices in consumer products. In other electrochromic materials, the electron transport is limiting. Therefore, there is a need to blend materials that can impart sufficient ionic and electronics conductivity into many electrochromic materials.

Hence, there is a need in the art for providing further methods for the preparation of casting or printing compositions. New preparation methods will facilitate the development and improvement of conductive and electrochromic properties of casting or printing compositions. It will also enable improvements of the general properties of the casting or printing compositions such as adhesion and homogeneity. Especially, it is desirable to find new methods which enable a reduced use of organic solvents or an exchange to water-based solvents, still allowing sufficient or improved conductive or electrochromic properties of polymeric films.

### Summary of the Invention

One object of the present invention is to overcome or at least alleviate the above-mentioned problems of the prior art and to meet the needs in the art, and thus to provide a method for providing a composition comprising water-soluble aggregates for water based casting or printing compositions.

More specifically, it is an object to achieve blending at the molecular level between an oxidizable polymer and a polymeric acid that can impart ionic conductivity as well as impart water-based processability. For example, the present invention can be used for the preparation of a water-based composition comprising a water-soluble polymer and an essentially non-watersoluble polymer, wherein the polymers are blended on a molecular level. The polymer regarded to be essentially non-soluble in water is a polymer which in known methods needs an organic solvent in the final composition to be dissolved or dispersed. It is an object to provide the possibility to reduce the use of organic solvents and to switch to aqueous compositions due to health aspects and due to easier handling of chemicals during processing, such as during a printing process.

Another object is to provide the possibility to prepare a composition comprising water-soluble aggregates without being limited to the use of surfactants or to solid polymer nanoparticles.

A general object is to provide a method which allows for possibilities to compose new aqueous polymer compositions which can result in beneficial ionic and/or electronic conductivity or improved film properties. In addition, improved film adhesion can be obtained. New polymer compositions can result in improved rheology of casting and printing compositions. For example, the viscosity can be reduced by ultrasonic treatment, as the mean-size of the aggregates is reduced. In addition, improved film adhesion can be obtained.

These and other objects are achieved by methods and products according to the present invention.

In a first aspect, the present invention relates to a method for providing a composition comprising water-soluble aggregates comprising an oxidized conductive polymer and a polymeric acid, comprising:
- providing a preparation comprising an oxidized or oxidizable conductive polymer and an organic solvent;
- adding an aqueous preparation comprising a polymeric acid; optionally oxidizing said oxidizable conductive polymer; and
- allowing said oxidized conductive polymer to interact with said polymeric acid to form an aqueous composition comprising water-soluble aggregates comprising an oxidized conductive polymer and a polymeric acid.

The aggregates are formed due to the electrostatic attraction between the positively charged oxidized polymer and the negative charges of the conjugate base to the polymeric acid.

By this method, new possibilities for obtaining polymer blends for casting and printing compositions are provided. The present invention can be used for the preparation of aqueous compositions, which in turn can be used for obtaining conductive films comprising a water-soluble polymer and an essentially non-watersoluble polymer, wherein the polymers are blended on a molecular level.

For example, the method allows for the use of new aqueous based casting or printing compositions comprising an oxidized polymer and a polymeric acid. Especially, the method allows for using a polymer which currently needs an organic solvent in the printing or casting solution or dispersion. Such polymers are herein referred to as essentially non-watersoluble polymers.Further, the method allows for polymer blends, which are blended at a molecular level, hence providing beneficial film properties. In addition, new polymer compositions can result in improved adhesion of an electrochromic polymer film, for example a polymer film that has poor adhesion to a hydrophilic substrate.

Preferably, allowing said oxidized conductive polymer to interact with said polymeric acid is performed by using ultrasonic treatment. By using ultrasonic treatment, an efficient interaction between the oxidized polymer and the polymeric acid is obtained. In addition, ultrasonic treatment may reduce the aggregate size and thereby provide beneficial film properties. When the aggregates has formed, the remaining organic solvent can be removed, and preferably be recycled. The term removing the organic solvent as used herein, refers to removing at least a part of the organic solvent or removing essentially all of the organic solvent. In preferred embodiments of the invention, more than 75 vol. % of the organic solvent is removed. In more preferred embodiments of the invention, more than 95 vol. % or more than 99 vol. % of the organic solvent is removed. The removing of organic solvent is for example performed by heat generated from the ultrasonic treatment, by external heating using an external heat source, or extraction of the organic phase. A suitable organic solvent is for example chloroform, since it provides solubility for non-polar polymers.
In a second aspect of the invention, the method provides a way of providing an aqueous composition comprising aggregates of long alkyl or alkoxy chain derivatives of polymers, such as dialkoxy derivatives of thiophene and pyrrole, and polymeric acid, as the polymeric acid is for example a polymer which comprises sulphonic, phosphonic, carboxylic or other acidic moieties. For example, the polymeric acid can be PSS (polysulfonic acid).

The oxidizable conductive polymer can either be oxidized spontaneously or oxidized by adding an oxidizing agent. For example, the oxidizable or oxidized conductive polymer includes polythiophenes, PEDOT, polyaniline or derivatives thereof, since these polymers are relatively easy to oxidize. Preferably, the oxidized or oxidizable conductive polymer comprises at least one alkoxy chain as a substituent. By using a polymer with an alkoxy chain, the transfer of the conductive polymer from the organic phase to the water phase is facilitated.

The polymeric acid includes for example a PSS, polyacid, or derivatives thereof, since a counter ionic polymer is desired. Preferably the polymeric acid provides improved conductivity to the formed polymer film. The method can also comprise adding a monomer enabling grafting of the polymer or the polymeric acid or both. By adding a monomer, grafting of the polymer blend can be achieved. This can be advantageous in certain applications where improved adhesion is desired. The method may further comprise the step of filtrating the aqueous composition. By filtration, large undesired aggregates can be removed from the printable composition. The preparation comprising an oxidized or oxidizable conductive polymer or said aqueous preparation comprising a polymeric acid may further comprise a surfactant. By using a surfactant, additional water solubility effects can be achieved. For example, it may facilitate the transfer from the organic phase to the water phase. The method according to the invention can also comprise adding an additional electrochromic composition, such as a polymer solution, to the mixture before or after allowing said oxidized conductive polymer to interact with said polymeric acid to form an aqueous composition comprising water-soluble aggregates comprising an oxidized conductive polymer and a polymeric acid. By the addition of an additional electrochromic composition improved electrochromic properties can be obtained.

The method can also comprise casting or printing of a film by using a preparation obtained from a composition according to the invention. In a third aspect, the invention relates to a composition obtainable by the method above. Compositions obtainable by the method according to the invention comprise a water-soluble polymer and an essentially non-watersoluble polymer, wherein the polymers are blended on a molecular level. Such compositions have beneficial ionic and/or electronic conductivity and/or improved film properties compared to blends produced from aggregates or particles of each polymer type .

According to embodiments of the invention, the organic solvent is non-soluble in water. As used herein, the term "non-soluble in water" refers to a solvent which is not soluble in water to more than 10 vol. %. Preferably, the organic sovent is not soluble in water to more than 5 vol. %. In even more preferred embodiment the organic solvent has a solubility in water which is lower than 1,5 vol. %, such as below 1 vol. %.

According to embodiments of the invention, the organic solvent is an unpolar organic solvent. As used herein, the term unpolar refers to a solvent which has low polarity and hence low solubility in water. By using an unpolar solvent, phase separation of the organic phase from the water occurs after the ultrasonification. Therefore, extraction or decantation can be used to remove the organic solvent. The unpolar solvent provides the possibiity to apply the method for oxidizable conductive polymers having low polarity (being essentially unpolar).

According to embodiments of the invention, the organic solvent has a boiling point which is lower than the boiling point of water. This is beneficial since heating then can be used to remove the organic solvent. By using an organic solvent which has lower boiling point than water, the organic solvent can be removed by heating. In embodiments of the invention the organic solvent is recycled by heating the organic solvent to cause evaporation and condensed for example by using a distillation column.

In a fourth aspect, the invention relates to a casting or printing composition comprising a composition obtainable by the method according to the invention. If needed, the casting or printing composition can comprise additional agents, such as rheology controlling agents and/or setting agents.

In a fifth aspect, the invention relates to an electrochromic device comprising a polymer layer obtained from a water-based polymer solution according to the herein described methods.

### Brief Description of the Drawings

The invention will now be described in more detail with reference to the accompanying schematic drawings, which by way of example illustrate currently preferred embodiments of the invention.
Fig.1 schematically illustrates miniemulsion according to prior art wherein an eletrochromic polymer is dispersed as particles in an aqueous phase by using a low molecular surfactant.
Fig. 2a-c schematically illustrate an embodiment of the method according to the invention for providing a composition comprising water-soluble aggregates comprising an oxidized conductive polymer and a polymeric acid, wherein:

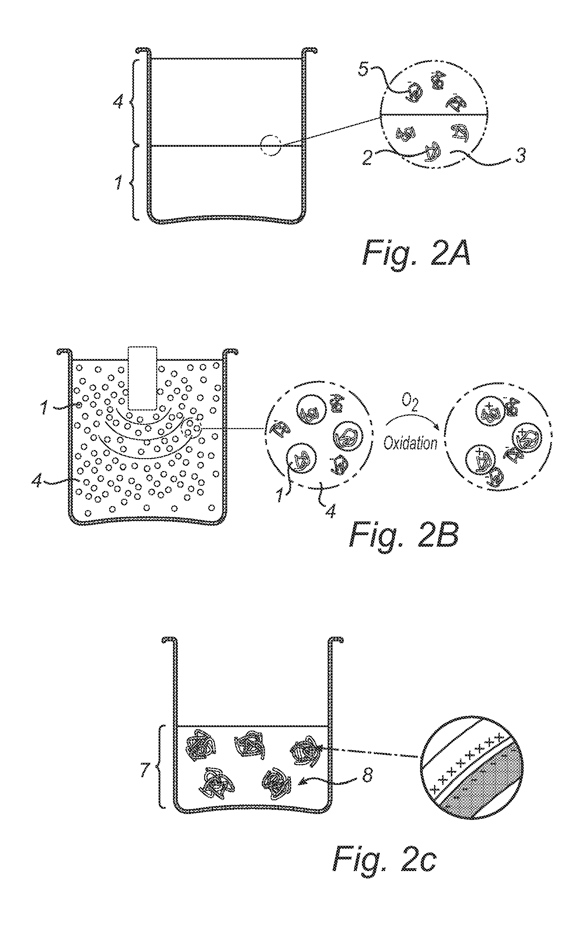

Fig. 2a shows a preparation comprising an oxidized or oxidizable conductive polymer in an organic solvent and an aqueous preparation comprising a polymeric acid. The organic and aqueous phase are phase-separated;
Fig. 2b shows the optional oxidation of the oxidizable conductive polymer and allowing the oxidized conductive polymer to interact with the polymeric acid to form an aqueous composition comprising the water-soluble aggregates; and
Fig. 2c shows the obtained aqueous composition comprising the water-soluble aggregates wherein the organic solvent has been evaporated.

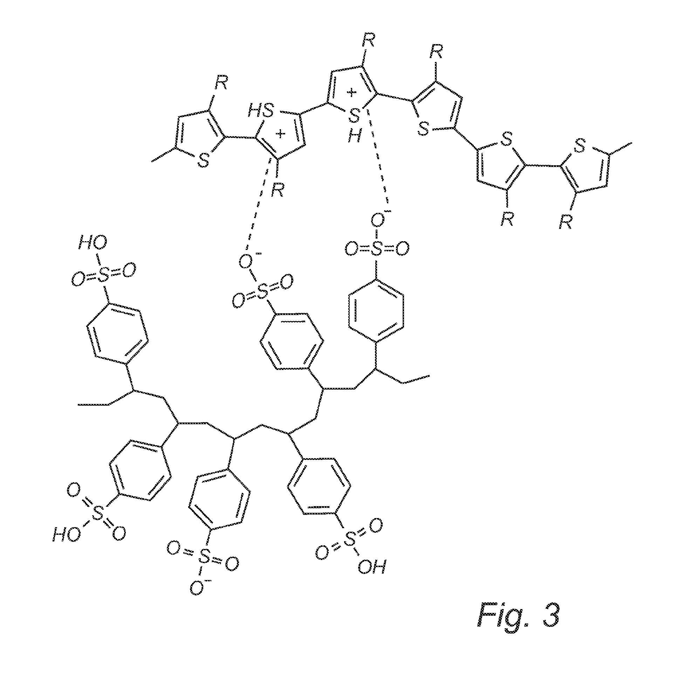

Fig. 3 illustrates an example of a molecule structure of a part of a water-soluble aggregate which can be obtained according to the invention, wherein the oxidized polymer is of polythiophene derivate and the polymeric acid is PSS. The aggregate is held together by electrostatic interactions.

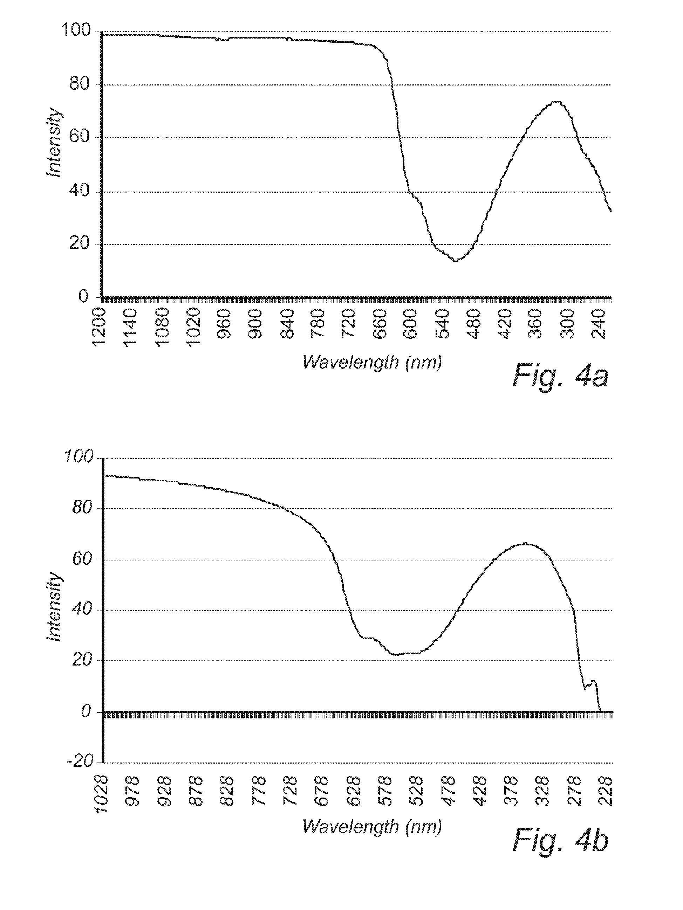

Fig. 4a shows an UV-VIS spectrum of the surface of a polymer film made of poly(3-octylthiophene) and SDS.
Fig. 4b shows an UV-VIS spectrum of the surface of a polymer film made of poly(3-octylthiophene) and PSS.

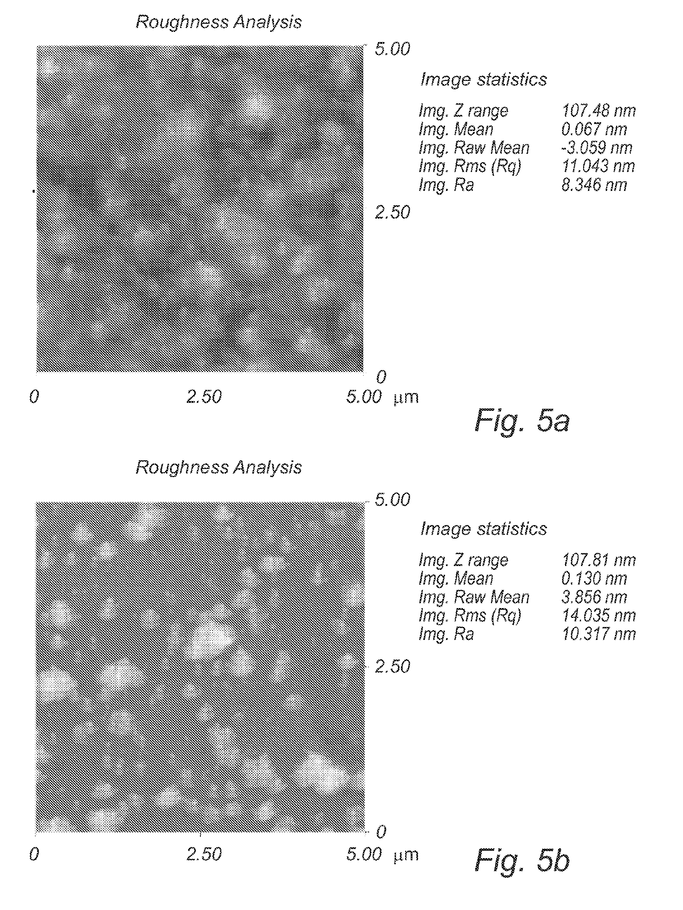

Fig. 5a shows an AFM image of the surface of a polymer film made of poly(3-octylthiophene) and PSS.
Fig. 5b shows an AFM image of the surface of a polymer film made of poly(3-octylthiophene) and SDS.

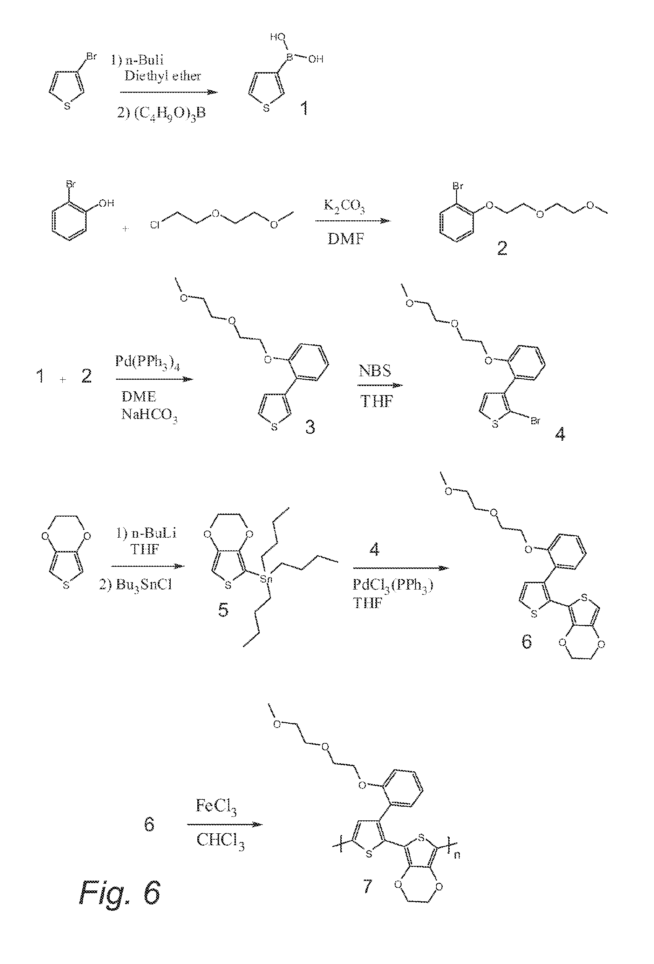

Fig. 6 shows a schematic drawing of a synthesis of an example of an oxidizable conductive polymer which can be used in the herein described method.

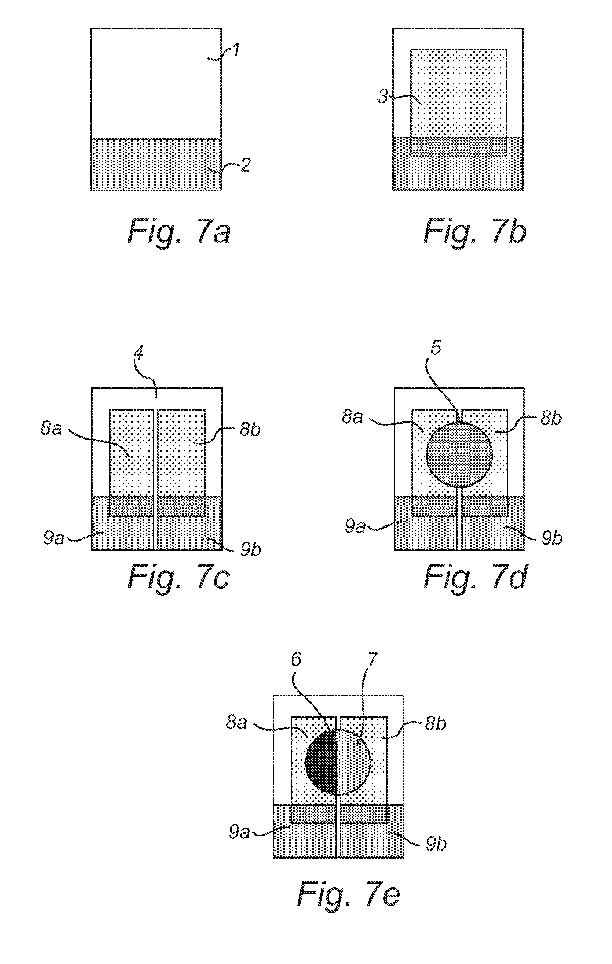

Fig. 7a-e shows an embodiment of a device construction using a polymer solution of a polymer obtained by the method according to the invention, wherein the polymer is the polymer synthesized in Fig. 6.

### Detailed Description of Preferred Embodiments

The invention relates to a method for providing a composition comprising water-soluble aggregates comprising an oxidized conductive polymer and a polymeric acid. The method comprises:
a) providing a preparation comprising an oxidized or oxidizable conductive polymer and an organic solvent;
b) adding an aqueous preparation comprising a polymeric acid;
c) optionally oxidizing said oxidizable conductive polymer; and
d) allowing said oxidized conductive polymer to interact with said polymeric acid to form an aqueous composition comprising water-soluble aggregates comprising an oxidized conductive polymer and a polymeric acid.

In preferred embodiments, the invention also comprises:
e) removing at least part of said organic solvent.

By the method, it is possible to manufacture water-based printing and casting compositions, for oxididable conductive polymers which by currently used methods needs an organic in the printing step. Especially, the oxidizable conductive polymers can be transferred due to the interaction between the organicphase and the water phase comprising polymeric acid.
In embodiments of the invention, the organic solvent is non-soluble with water and/or the organic solvent has a boiling point which is lower than the boiling point of water.
In embodiments of the invention, the oxidized or oxidizable conductive polymer comprises at least one alkoxy chain.
In embodiments of the invention, allowing said oxidized conductive polymer to interact with said polymeric acid comprises ultrasonic treatment.

In embodiments of the invention, the oxidizable conductive polymer is oxidized spontaneously or oxidized by adding an oxidizing agent.

In embodiments of the invention, the method further may comprise the removing said organic solvent, adding a monomer enabling grafting of the polymer or the polymeric acid or both, filtrating said aqueous composition, and/or adding an additional electrochromic composition to the mixture before or after allowing said oxidized conductive polymer to interact with said polymeric acid to form an aqueous composition comprising water-soluble aggregates comprising an oxidized conductive polymer and a polymeric acid.

The oxidizable or oxidized conductive polymer can be selected from polythiophenes, PEDOT, polypyrrole, polyaniline or derivatives thereof, and the polymeric acid may be a PSS, polyacid, or derivatives thereof.

In embodiments of the invention, the preparation comprising oxidized or oxidizable conductive polymer or said aqueous preparation comprising a polymeric acid further comprises a surfactant.

In embodiments of the invention, the organic solvent is chloroform.

The invention also relates to a method for producing an electrochromic layer using a composition prepared according to any of the preceding claims comprising casting or printing of a film by using said composition; and curing said film. The invention also relates to a composition, such as a casting or printing composition, obtainable according to any of the herein described embodiments.

An embodiment of the method according to the invention for preparing an aqueous composition comprising water-soluble aggregates is schematically illustrated in Fig. 2a-c. The present method comprises:
A preparation 1 comprising an oxidized or oxidizable conductive polymer and an organic solvent is obtained by dissolving a solid oxidized or oxidizable conductive polymer 2 or a salt thereof, into the organic solvent 3. The preparation can also be obtained by adding a liquid concentrate of an oxidized or oxidizable conductive polymer. The polymer which is added can be in oxidized form, or in unoxidized form and be oxidized later during the method. Advantageously, a solution of an entirely dissolved polymer is obtained. The preparation 1 can also be made by partly dispersing the oxidized or oxidizable conductive polymer 2 into the organic solvent 3. In order to dissolve or disperse the oxidized or oxidizable polymer into the organic solvent, agitation, ultrasonic treatment or gentle heating may be used.

The term "oxidized or oxidizable conductive polymer" 2 as it is used herein, refers to at least one polymer which exhibits electronic or ionic conductivity, or both, and which can be transformed into different oxidation states and which are generally considered as soluble in an organic solvent. The oxidized or oxidizable conductive polymer is either provided directly in oxidized form or is oxidized when dispersed into the organic phase, when added to the aqueous phase, or is oxidized during ultrasonic treatment.

The oxidized or oxidizable conductive polymer can include any polymer comprising monomer units made up of five membered heterocyclic rings and solubilized by one or two alkyl or alkoxy groups in the 3- and 4-positions, such as a 3,4-alkylenedioxy substituted five membered heterocycles. This includes for example polythiophenes and polypyrrole and derivatives thereof, such as poly (3-alkylthiophenes) and poly (3,4-alkylenedioxy)-2,5-tiophenes comprising a side group, which increases the solubility. The polymer can be any conductive polymer which is soluble in organic solvent and which can be oxidized by air alone, by air in presence of an acid, or by an oxidizing agent.

Polymers that are oxidizable by air in presence of a strong acid are preferred in this invention. It is for example known that poly(3-alkylthiophenes) in chloroform solution can be oxidized by air in the presence of methylsulfonic acid, but not in absence of acids or presence of weaker acids such as carboxylic acids. Other examples of polymers that are oxidized by air in presence of strong acids are the poly(3,4-ethylenedioxythiophenes). The polymer can also be any conductive polymer which is partly soluble in organic solvent and which can be oxidized.

In embodiments of the invention, the oxidized or oxidizable conductive polymer comprises at least one alkoxy chain. For example the alkoxy chain may comprise 2-10 alkoxy groups, including for example metoxy, etoxy etc. The alkoxy group may be linked directly to the polymer or indirectly by using a linking molecular group between the polymer and the alkoxy chain. The polymer may include one or several alkoxy chains, and may contain any other additional suitable organic molecular groups such as hydroxyl and carboxyl groups. In addition, also molecular groups comprising sulphur or nitro may be present in the polymer.

The polymer may contain a thiophenegroup in the polymer backbone. The alkoxy chain may linked to the thiophene group directly or indirectly by using a linking molecule such as a phenyl group. The alkoxy may also be linked to any other preferred molecular group in the polymer. One specific example of such polymer is described in example 1 c. Suitable polymers can include a PEDOT or aniline derivate and at least one alkoxy chain. The organic solvent 3 can be any organic solvent which is suitable for dissolving an oxidizable conductive polymer, for example chloroform. Chloroform is preferred since it is a good solvent, evaporates readily and is non-flammable. If desirable, mixtures of organic solvents can be used.

An aqueous preparation 4 comprising a polymeric acid 5 is added to the preparation comprising an oxidized or oxidizable conductive polymer. The aqueous preparation 4 comprising a polymeric acid 5 can be provided by dissolving a solid counter-ionic polymer composition, such as a salt of polymeric acid or using a liquid concentrate comprising polymeric acid. Preferably, the polymeric acid 5 is entirely dissolved in the water. The aqueous preparation 4 can also be made by dispersing a polymeric acid 5 in water 6. In order to dissolve or disperse the polymeric acid, agitation, ultrasonic treatment or gentle heating may be used.

The term "polymeric acid" 5 as is used herein, refers to any polymer which can be transformed into an ionic state, for example sulfonic acids, phosphonic or phosphoric acids or combinations thereof. In addition to using pure polymeric acids, compositions comprising polymeric acid may be used. For example a composition comprising an excess of a polymeric acid and a polymer with electric conductivity and electrochromic properties may be used. Such compositions may be used to modify the electrochromic properties of a film produced by the composition according to the invention, or to improve the electronic conductivity in the composition according to the invention by the presence of a second electron conductor.

Polymeric acids can for example include poly(styrene sulfonic acids), poly(acrylamidopropyl-sulfonic acids), poly(vinylphosphoric acids) or derivates thereof. Preferably, PAMPS (polyacrylamidopropylsulfonic) acids or a salt thereof is used. Other polymers which can form negative ionic charge and which provides water processability can also be used according to the invention. The ionization may occur spontaneously or by adding an ionization agent or by adjusting the pH of the solution. Preferably a strong acid is used, since it will increase the probability of air oxidation of the oxidizable polymer. The polymer may be provided as a solid composition or as a liquid concentrate.

The oxidized conductive polymer in the organic solvent is then allowed to interact with the polymeric acid in the aqueous phase. The interaction is facilitated by increasing the interfacial surface area between the organic and aqueous phase, preferably by homogenisation. In many cases the oxidation is obtained during this treatment, for example by using sonification. By the treatment, the oxidized conductive polymer molecules become associated with the polymeric acid molecules to form water-soluble aggregates 8. Subsequently, an aqueous composition 7 comprising water-soluble aggregates 8 comprising an oxidized conductive polymer and a polymeric acid is obtained. In embodiments of the invention the organic solvent 3 is then evaporated.

The term "aggregate" as it is used herein, refers to at least one oxidized conductive polymer chain and at least one molecular chain of a polymeric acid which are assembled by electrostatic interaction. More specifically, the homogenization serves to bring the polymeric acid into contact with the oxidized or oxidizable polymer. Preferably, the interaction of the oxidizable polymer and the polymeric acid takes preferably place under conditions that can oxidize the polymer. Oxidation results in positive charges in the oxidized polymer molecules so that electrostatic interactions between the oxidized polymer and the conjugate bases of the polymeric acid, can provide for blending at the molecular level and water solubilization of the aggregates. It should be noted that the blending and the water solubilization occurs in a way that not would be possible by using the above described prior art. The homogenisation is preferably done by using ultrasonic treatment, preferably at high energy, for example 20 kW/L. The homogenisation is preferably performed at room temperature or at slightly elevated temperatures.

The molecular weight of the oxidizable polymer and the polymeric acid may be as desired. For example, if it is desired to induce new functional groups to the polymers during sonification a higher molecular weight may be chosen, since sonification treatment may result in breakage of the polymer chains and hence result in the formation of functional groups. The introduction of functional group by cleaving of the polymer chain may be beneficial since it can improve the adhesion properties of the formed film.

In addition, the polymer concentrations of the preparation 1 and 4 can be any, as long as the requirements of the method are meet. This includes sufficient solubility as well as the sufficient electrochromic properties.

The solubility of the oxidized or oxidizable conductive polymer or the polymeric acid can be further improved by using additives such as surfactants or other solubilizing agents. In this case the preparation 1 or 4 will comprise an emulsion or suspension of the polymer. Alternatively, the preparation 1 comprising an oxidized or oxidizable conductive polymer is obtained by polymerization. In this case a monomer and a polymerisation initiator is added to the organic solvent.

The mixing ratio of the oxidized or oxidizable conductive polymer and the polymeric acid can be chosen as desired. In order to obtain good conductivity, it is advantageous to use amounts of polymers which allow for the formation of a film comprising one continuous conductive phase of any of the polymers. Preferably, the polymeric acid is present in excess over the oxidizable or oxidized polymer. This allows for oxidation and a good solubilization of the oxidized polymer.

Alternatively to ultrasonic treatment, the interaction can be obtained by using vigorous agitation. Other interaction methods can also be used as long as the sufficient interaction is obtained.

Additional cooling may be necessary due to the high effects that are preferably used during sonification. The needed treatment time varies depending on the treatment method and depending on if the aggregate size is to be reduced.

The organic solvent 3 is either spontaneously evaporated during ultrasonic treatment or can easily be separated by any suitable separation method, such as evaporation by adding an external heat source. The amount of organic solvent, which is used in casting or printing compositions, can hence be reduced or eliminated from the casting or printing process. Moreover, the method allows for the organic solvent to be recycled.

Fig. 3 shows a typical arrangement of a water-soluble aggregate according to the invention. The interaction between the oxidized conductive polymer and the polymeric acid is essentially an intermolecular electrostatic interaction by the positively charged oxidized conductive polymer and the negatively charged polymeric acid, and results in watersoluble aggregates. Fig. 3 shows the arrangement in a composition comprising watersoluble aggregates comprising a polythiophene derivate and PSS.

In another embodiment of the invention the method is combined with further treatment of the composition. Any further treatment can be used, which results in improved properties of the composition, such as purity, rheology, film properties, conductive properties and electrochromic properties. Sonification may be used to further solubilize the oxidizable polymer or to reduce the size of the aggregates. Further, filtration of the aqueous composition can be used in order to remove undesired side-products, such as large solid aggregates. Furthermore, curing can be used following the casting or printing process in order to dry, fixate or react a polymer film obtained by a polymer composition according to the invention onto a substrate. The curing is preferably performed by heating, however it might be beneficial to add a monomer and an initiator or an epoxy compound in order to achieve sufficient fixation.
In still other embodiments of the invention, further additives are added to the preparation comprising an oxidized or oxidizable polymer and organic solvent, the aqueous preparation comprising the polymeric acid and/or the final composition comprising the water-soluble aggregates. For example, a monomer can be added in order to graft the oxidizable conductive polymer to the polymeric acid. By utilizing grafting the stability of the water-soluble aggregates can be increased if necessary. Grafting can be obtained by adding a polymerisable monomer such as acrylic acid or inducing radical formation by sonification. Further, a surfactant can be added in order to increase the stability of the oxidizable conductive polymer, the polymeric acid and/or the water-soluble aggregates. Further, any additive can be added which enables curing of a film obtained by the present composition comprising water-soluble aggregates. Furthermore, any additive which improves the rheological properties of the obtained composition comprising water-soluble aggregates can be added in order to provide a casting or printing composition with beneficial rheology. Furthermore, any additive which provides improved conductive or electrochromic properties can be added, for example carbon nanotubes. Furthermore, any additive which improves the film adhesion may be added. Other additives that may be added include stabilizing agents or a further solvent. The invention is further illustrated by the following examples, which are not to be construed as limiting, but merely as an illustration of some preferred features of the invention.

### Example of preparation method of polymer

### Preparation of thiophen-3-ylboronic acid (1)

To a solution of 3-bromothiophene (10.0 g, 61.3 mmol) in diethyl ether (150 ml) was added n-Butyl lithium (4.1 g, 64.4 mmol) at -70°C. The solution was stirred at -70°C for 5 minutes followed by addition of tributylborate (15.5 g, 67.5 mmol). The reaction was kept at -70°C for 90 minutes before it was allowed to reach room temperature where the reaction proceeded for an additional 90 minutes. Water (30 ml) and 1 M HCI-solution (200 ml) was added followed by separation of the phases. The acidic phase was extracted an additional time with diethyl ether (150 ml). The combined organic phase was extracted with 1 M NaOH-solution (3*150 ml) and washed with diethyl ether. The NaOH-phase was acidified and extracted with diethyl ether (3*100 ml), washed with water, and dried over MgSO₄. After solvent removal by rotary evaporation, 6.17 g white crystals were collected.

### Preparation of 1-bromo-2-(2-(2-methoxyethoxy)ethoxy)benzene (2)

To a solution of 2-bromophenol (5.0 g, 28.9 mmol) in DMF (200 ml) was added potassium carbonate (17 g, 123 mmol) and the reaction was heated to 105°C. 1-chloro-2-(2-methoxyethoxy)ethane (6.0 g, 43.4 mmol) was added drop by drop during a period of 40 minutes and the reaction continued over night. The reaction was cooled to room temperature and filtered. After addition of water (100 ml) the remainder was extracted with diethyl ether (3*150 ml). The organic layer was washed with 2 M HCI (3*150 ml), 2 M NaOH (3*150 ml), and water (3*150 ml). After drying over MgSO₄ and solvent removal, 7.4 g of colorless oil was collected.

### Preparation of 3-(2-(2-(2-methoxyethoxy)ethoxy)phenyl)thiophene (3)

2 (3.0 g, 10.9 mmol) was dissolved in ethylene glycol dimethyl ether (75 ml) and the system was evacuated. The reaction mixture was bubbled with nitrogen gas for 10 minutes and tetrakis triphenylphosphine palladium(0) (100 mg, 0.09 mmol) was added. After an additional 10 minutes of bubbling with N₂, 1 (2.8 g, 21.8 mmol) was added together with 1 M NaHCO₃ solution (30 ml). The reaction continued at reflux over night. Solvent evaporation was followed by addition of water (75 ml) and extraction with diethyl ether (2*200 ml). The solution was dried over MgSO₄ yielding 3.63 g of reddish oil.

### Preparation of 2-bromo-3-(2-(2-(2-methoxyethoxy)ethoxy)phenyl)thiophene (4)

To a solution of 3 (3.63 g, 13.0 mmol) in THF (50 ml) was added N-Bromosuccinimide (2.09 g, 11.8 mmol) and the reaction was allowed to continue at room temperature in darkness over night. The THF was evaporated followed by addition of water (100 ml) and extraction with diethyl ether (3*75 ml). After drying over MgSO₄ 2.84 g of red oil was isolated by column chromatography using silica gel and Toluene:Methanol (20:1) as eluent.

### Preparation of tributyl(2,3-dihydrothieno[3,4-b][1,4]dioxin-5-yl)stannane (5)

To a solution of 2,3-dihydrothieno[3,4-b][1,4]dioxine (10.0 g, 70.3 mmol) in anhydrous THF (150 ml) was added n-butyl lithium (4.06 g, 63.3 mmol) at -78°C under nitrogen atmosphere. The reaction was kept at -78°C before it was allowed to reach room temperature. After 30 minutes at room temperature the reaction was once again cooled to -78°C and tributylchlorostannane (27.47 g, 84.4 mmol) was added. The reaction continued at room temperature over night. Water (100 ml) and diethyl ether (100 ml) were added and the organic layer was dried over NaSO₄. After solvent removal and purification by vacuum distillation, 21.4 g of light brown oil was collected.

### Preparation of 5-(3-(2-(2-(2-methoxyethoxy)ethoxy)phenyl)thiophen-2-yl)-2,3dihydrothieno[3,4-b][1,4]dioxine (6)

4 (2.84 g, 7.95 mmol) and 5 (5.14 g, 11.9 mmol) were dissolved in anhydrous THF (120 ml). After 15 minutes of bubbling with nitrogen gas bis(triphenylphosphine)palladium(II) dichloride (100 mg, 0.14 mmol) was added and the reaction refluxed over night. The solvent was evaporated. After addition of water (100 ml) the product was extracted with diethyl ether (3*75 ml) and dried over MgSO₄. The product was further purified by dissolution in a small amount of diethyl ether and then performing column chromatography using silica gel and diethyl ether:petroluem ether (3:1) as eluent. 1.15 g of pale yellow oil was collected.

### Preparation of poly-5-(3-(2-(2-(2-methoxyethoxy)ethoxy)phenyl)thiophen-2-yl)-2,3dihydrothieno[3,4-b][1,4]dioxine (7)

To a solution of 6 (200 mg, 0.48 mmol) in chloroform (5 ml) was added a slurry of anhydrous FeCl₃ (310 mg, 1.91 mmol) in chloroform (4 ml) in small portions over 2 hours. The polymerization was allowed to continue for an additional 3 hours in room temperature. The reaction mixture was precipitated from hexane (200 ml). After filtration the polymer was dissolved in boiling chloroform (100 ml) and washed with concentrated NH₃-solution (3*150 ml), 0.05 M EDTA-solution (3*150 ml), and water (3*150 ml). The organic layer was concentrated and precipitated from hexane (200 ml) yielding 98 mg of deep purple polymer. Below, the resulting polymer is denoted polymer 7,

### Example 1 a

### Preparation of an aqueous composition according to the present method using a polythiophene derivate.

A polythiophene derivate, poly(3-octylthiophen-2,5diyl), regioregular, was dissolved in chloroform in a concentration of 1 wt%. Poly(styrenesulfonic acid), PSSH, was dissolved in water in a concentration of 5 wt%. The aqueous preparation comprising a PSS was then added in the beaker comprising the organic solvent and polythiophene derivate.

The mixture was sonificated, at an effect of 10+50%, 10% duty cycle for 4*1 minutes, by using an ultrasonic horn of model Bandelin ultrasonic homogenizer HD2200.

During sonification a color change was observed. While the original polymer solution is orange-yellow and the PSSH is pale yellow, the color of the heavy phase changes to reddish-violet. This is caused by the oxidation of the polythiophene derivate molecules during sonification.

As the sonification proceeded with high effect per volume the chloroform evaporated. When all chloroform had evaporated a homogeneous aqueous composition with wine-red color was obtained.

### Example 1 b

### Preparation of an aqueous composition according to the present method, with improved electronic conductivity.

A polythiophene derivate, poly(3-octylthiophen-2,5diyl), regioregular, was dissolved in chloroform in a concentration of 1 wt%. Poly(styrenesulfonic acid), PSSH, was dissolved in water in a concentration of 5 wt%. The aqueous preparation comprising a PSS was then added in the beaker comprising the organic solvent and polythiophene derivate.To this mixture was added an equal amount of a printable composition containing poly(3,4-ethylenedioxythiophene and polystyrenesulfonic acid, PEDOT:PSSH, ICP 1010 , supplied by AGFA. The mixture was sonificated, at an effect of 50%, 10% duty cycle for 4*1 minutes, by using an ultrasonic horn of model Bandelin ultrasonic homogenizer HD2200.

### Example 1c.

### Preparation of an aqueous composition acording to the present method comprising polymer 7.

5.4 mg of polymer 7 was dissolved in 2.02 g of chloroform. This solution was added to a mixture of 1.09 g of a PEDOT:PSSH based screen printing ink called CLEVIOS™ S V3, supplied by H. C. Starck, and 4.13 g deionized water. This mixture was sonicated for five minutes. After sonication, chloroform was removed by rotary evaporation and water was removed by vacuum evaporation until the remaining ink weighed 1.2 g.

### Example 2

### Use of the obtained composition in example 1 b for the manufacturing of a lateral pixel in an electrochromic stack.

The lateral pixel comprises a lower layer of PEDOT/PSS which serves as an electrochromic layer that can provide blue color to the pixel, and as a supporting electrode for a top electrochromic layer, whose conductivity is facilitated by using a conducting substrate. The lateral pixel is masked by tape and the composition in example 1 a is cast in the opening. After drying the film, a printable electrolyte is deposited so that it covers both the area covered with the electrochromic polymer and areas not covered by it. The pixel can be switched by applying a potential between the two electrode areas. In its resting state, the pixel is red-violet. When a positive voltage is applied to the pixel area and a negative voltage is applied to the counterelectrode, the pixel gets a light green color. This represents oxidation of the electrochromic stack in the pixel area and a reduction in the counter electrode area.

When the polarisation is switched, the pixel area turns blue. The deep blue color of the reduced form of the bottom PEDOT layer dominates the color. After switching of the voltage, the pixel will reverse to its red color on standing. This return to the red state can be speeded by giving the pixel a short oxidation pulse or by shorting electrodes.

### Example 3

### Comparison of the inventive method, described in example 1 a, for manufacturing an electrochromic layer and using a low molecular surfactant instead of a polymeric acid.

A film of the material according to example 1 was prepared.

The film was compared to a film made by the same preparation parameters as in example 1 a, except that the amount of PSS was exchanged to equal amount of SDS in weight percent.

The films were then analysed by UV-VIS spectroscopy. As can be seen in Fig. 4a and 4b, the inventive layer provides significantly higher absorption in the region above 700 nm. This is attributed to doped states of polythiophenes. One can also see that the peaks attributable to p-stacking bands are different. This indicates that the polythiophene is present in oxidized form.

The films were also analysed by AFM. As can be seen in Fig. 5a and 5b showing typical surfaces of the two polymer films, the inventive layer is actually even smoother than the prior art layer. The smoothness of the inventive electrochromic film the size of the aggregates. Ultra-high smoothness is advantageously used in electronic devices comprising conductive or electrochromic films.

### Example 4

### An electrochromic device made from a water-based composition based on polymer 7.

Use of the obtained composition in example 1 c for the manufacturing of an electrochromic device.

The ink described in example 1 c was coated on a substrate called Orgacon, supplied by Agfa. Orgacon is a coating based on PEDOT:PSSH that is electrochromic and conductive, on a polyethyleneterephtalate transparent film. The composition was coated so that it covered an area at the edge of the film so that the ink covered both an PEDOT:PSSH coated area, and an area of bare plastic film. After coating, the film was dried on a hot plate at 80 °C for five minutes, and a line was cut so that it divided the ink coated area and the PEDOT coated area into two electrodes.

Fig.7 shows a device comprising the polymer 7 prepared according to the method described above. Fig. 7a schematically illustrates a substrate comprising a coated portion 2 covered by an electrically conductive polymer, and a bare portion 1 being free of conductive polymer. The substrate is according to this example an edge piece of an Orgacon™ EL-350 film, comprising a first portion or a coated portion 2 covered by a PEDOT:PSSH based coating, and a second portion or a bare portion 1 corresponding to a bare edge of the film free of conductive polymer.

As schematically illustrated in Fig. 7b, ink 3 prepared as described in example 1 c is coated or applied such that it covers at least a portion of said coated portion 2 i.e. the electrically conductive polymer, as well as a portion of said bare portion 2 i.e. the bare portion of said substrate. Thus, the ink 3 is in electronic contact with the covered portion 2. One purpose of said second portion is to supply contact portions the ink 3, it is normally better to put external electrodes in contact with the covered portion 2 rather than the ink 3, as the PEDOT:PSSH based coating is normally mechanically stronger than the ink 3.

As schematically illustrated in Fig. 7c, an electrode partition line 4 is drawn through the electrically conductive polymer layer of said coated portion 2 as well as through the ink 3, such that the ink 3 is separated into a first ink portion 8a and a second ink portion 8b which are electrically isloated from each other and such that the electrically conductive polymer is separated into a first contact portion 9a and a second contact portion 9b which are electrically separated from each other. As is schematically illustrated in Fig.7d, a transparent or semi-transparent electrolyte 5 is coated or applied on the ink 3 and over the partitioned line 4, such that said first ink portion 8a and said second ink portion 8b are ionically connected to each other by means of the electrolyte. The electrolyte is applied such that it covers a respective portion of said first ink portion 8a and second ink poition 8b, which ink portions 8a,8b are both arranged on said bare poition 1 of said substrate. Any suitable electrolyte may be used, for example an electrolyte described in WO02/071505 (see for example page 12, line 1 to page 13, line 8 and page 23, lines 5-19). Other examples of a suitable electrolytes are described in WO08/062149, e.g. in example 5.

As is scematically illustrated in Fig. 7e, the color of the first and second ink portions 8a,8b can be altered. This is achieved by applying a potential difference between said first and second contact portions 9a,9b, which are electronically separated from each other. The applied potential difference initiates an electrochemically reaction of the electrolyte covered portion of the ink 3, i.e. one electrolyte covered ink portion is reduced and one electrolyte covered ink portion is oxidised, whereby the respective oxidation and reduction of the ink 3 alters the color thereof. A 3V DC potential applied over the contact portions 9a,9b, with the negative pole on the left side 9a in the figure, leads to darkening of the portion of the ink which is reduced 6, and increased transparency of the portion of the ink which is oxidised 7, with a clear contrast as a result.

Although the present invention has been described in connection with particular embodiments thereof, it is to be understood that various modifications, alterations and adaptations may be made by those skilled in the art without departing from the claimed scope. For example, the method may be modified, for example the addition of the organic phase to the aqueous phase may be performed in several steps during sonification. Further conductive polymers, such as PEDOT:PSS can be mixed with the aggregates in order to obtain improved conductivity of the formed layers.

## Claims

1. A method for providing a composition comprising water-soluble aggregates comprising an oxidized conductive polymer and a polymeric acid, comprising:
• providing a preparation comprising an oxidized or oxidizable conductive polymer and an organic solvent;
• adding an aqueous preparation comprising a polymeric acid;
• optionally oxidizing said oxidizable conductive polymer; and
• allowing said oxidized conductive polymer to interact with said polymeric acid to form an aqueous composition comprising water-soluble aggregates comprising an oxidized conductive polymer and a polymeric acid.

2. The method according to claim 1, further comprising the step of:
• removing at least part of said organic solvent.

3. The method according to any of the preceding claims, wherein the organic solvent is non-soluble in water.

4. The method according to any of the preceding claims, wherein the organic solvent has a boiling point which is lower than the boiling point of water.

5. The method according to any of the preceding claims, wherein the oxidized or oxidizable conductive polymer comprises at least one alkoxy chain.

6. The method according to any of the preceding claims, wherein allowing said oxidized conductive polymer to interact with said polymeric acid comprises ultrasonic treatment.

7. The method according to any of the preceding claims, wherein said oxidizable conductive polymer is oxidized spontaneously.

8. The method according to claim 1 to 7, wherein said oxidizable conductive polymer is oxidized by adding an oxidizing agent.

9. The method according to any of the preceding claims further comprising the step of:
• removing said organic solvent.

10. The method according to any of the preceding claims further comprising:
• adding a monomer enabling grafting of the polymer or the polymeric acid or both.

11. The method according to any of the preceding claims further comprising the step of:
• filtrating said aqueous composition.

12. The method according to any of the preceding claims further comprising the step of:
• adding an additional electrochromic composition to the mixture before or after allowing said oxidized conductive polymer to interact with said polymeric acid to form an aqueous composition comprising water-soluble aggregates comprising an oxidized conductive polymer and a polymeric acid.

13. The method according to any of the preceding claims wherein said oxidizable or oxidized conductive polymer is polythiophenes, PEDOT, polypyrrole, polyaniline or derivatives thereof.

14. The method according to any of the preceding claims wherein said polymeric acid is a PSS, polyacid, or derivatives thereof.

15. The method according to any of the preceding claims, wherein said preparation comprising oxidized or oxidizable conductive polymer or said aqueous preparation comprising a polymeric acid further comprises a surfactant.

16. The method according to any of the preceding claims wherein said organic solvent is chloroform.

17. A method for producing an electrochromic layer using a composition prepared according to any of the preceding claims comprising:
• casting or printing of a film by using said composition; and
• curing said film.

18. A composition obtainable by the method of any of the claims 1-17.

19. A casting or printing composition comprising a composition according to claim 18.
